# EUROPEAN PATENT SPECIFICATION

(11) **EP 1 704 982 B1**
(45) Date of publication and mention of the grant of the patent: **02.12.2009**
(21) Application number: 06005388.1
(22) Date of filing: 16.03.2006
(51) Int. Cl.: B29C 45/00, B29C 45/27, A47G 25/28

(54) **Method and mould for the production of a coat hanger**
Verfahren und Form zur Herstellung eines Kleiderbügels
Procédé et moule pour la fabrication d'un cintre

(30) Priority: 21.03.2005 IT VI20050077
(43) Date of publication of application: 27.09.2006
(73) Proprietor: Valplastick S.R.L., 36054 Montebello Vicentino (VI) (IT)
(72) Inventor: Zordan, Adriano, 36050 Montorso Vicentino (VI) (IT)
(74) Representative: Terreran, Gabrio

(56) References cited:
- EP-A- 1 413 232
- WO-A-02/32643
- WO-A-2004/071742
- FR-A- 1 317 764
- FR-A- 2 744 614
- GB-A- 1 157 844
- US-A- 3 406 881
- US-A- 3 553 785
- US-A- 4 289 468
- US-A- 4 560 342
- US-A1- 2003 183 665
- US-A1- 2004 256 425
- PATENT ABSTRACTS OF JAPAN vol. 2000, no. 13, 5 February 2001 (2001-02-05) -& JP 2000 280302 A (INOAC CORP), 10 October 2000 (2000-10-10) -& DATABASE WPI Section Ch, Week 200064 Derwent Publications Ltd., London, GB; Class A32, AN 2000-660745 XP002388241 & JP 2000 280302 A (INOAC CORP KK) 10 October 2000 (2000-10-10)
- PATENT ABSTRACTS OF JAPAN vol. 017, no. 365 (M-1442), 9 July 1993 (1993-07-09) -& JP 05 057751 A (SUNSTAR INC), 9 March 1993 (1993-03-09)
- PATENT ABSTRACTS OF JAPAN vol. 011, no. 247 (M-615), 12 August 1987 (1987-08-12) -& JP 62 056112 A (TOSHIBA CORP), 11 March 1987 (1987-03-11)
- PATENT ABSTRACTS OF JAPAN vol. 2000, no. 03, 30 March 2000 (2000-03-30) & JP 11 348065 A (ASAHI CHEM IND CO LTD), 21 December 1999 (1999-12-21)
- PATENT ABSTRACTS OF JAPAN vol. 2000, no. 23, 10 February 2001 (2001-02-10) -& JP 2001 162646 A (YAZAKI CORP), 19 June 2001 (2001-06-19) -& DATABASE WPI Section Ch, Week 200156 Derwent Publications Ltd., London, GB; Class A32, AN 2001-505869 XP002388242 & JP 2001 162646 A (YAZAKI CORP) 19 June 2001 (2001-06-19)

## Description

The invention concerns a method and a mould for the production of a coat hanger, particularly suitable for producing plastic coat hangers.

As is known, for putting away garments and items of clothing in general specific supporting devices, also called coat hangers, are used.

Below, therefore, the term coat hanger is used to indicate any supporting device for garments and/or items of clothing.

The known art has proposed plastic coat hangers in different shapes and manufactured using different production techniques, which substantially consist of a main body with two supporting elements or arms, provided with a supporting hook.

Each of said elements provides a resting surface for the item of clothing to be hung and is designed to support the garment in the best possible way.

As is known, these supporting devices are chosen not only due to their functional characteristics, but also due to their peculiarities as they are useful, for example, for highlighting a particular item of clothing displayed at a sales outlet.

It is for these reasons that this sector is constantly on the lookout for new solutions and new production techniques aimed at obtaining coat hangers with innovative and special shapes and characteristics.

Said supporting devices may also comprise plastic coat hangers having a hollow main body.

Said type of coat hanger is produced by injection moulding techniques which advantageously provide a greater variety of solutions, but have certain limits and drawbacks.

An injection moulding techniques is known from GB 115784.

FR-A-2744614 discloses a plastic coat hanger obtainable by injection moulding.

In particular a first drawback of the coat hangers of known type, produced with the traditional moulding techniques, is represented by the fact that at times they have surface defects and imperfections due substantially to the shrinkage and stresses that develop during the moulding phases.

A further drawback consists in the fact that said defects are even more evident in the parts in which the walls of the main hollow body are thicker. In this case the above-mentioned stresses become manifest also inside the walls, generating warping and undesired effects that limit the thicknesses of the walls that can be produced.

A further drawback consists in the fact that said imperfections increase as the thickness of the walls of the main body increases.

A further drawback is represented by the fact that the known production methods entail a considerable number of production rejects due to the above-mentioned defects, significantly affecting production costs.

A further drawback consists in the fact that said defects and imperfections do not appear repetitively and predictably.

The aim of the present invention is to overcome said drawbacks.

In particular, a first aim of the invention is to produce a coat hanger and a method for the production thereof without surface and internal imperfections and defects.

A further aim is to produce a coat hanger that is transparent.

A further aim is to propose a method that permits the production of bodies or parts of a coat hanger having any thickness.

A further aim is to propose a method that permits significant reduction of the number of production rejects due to the above-mentioned defects.

A further aim is to propose a mould which implements the method proposed and permits elimination of the above-mentioned production defects.

A further aim is to propose a method and a mould to obtain a device having constant repeatable characteristics.

A further aim is to produce a mould that is easy to set up, reliable and which does not require frequent and costly maintenance operations.

Said aims are achieved through the implementation of, a method and a mould in accordance with the contents of the respective independent claims.

The dependent claims illustrate further advantageous characteristics of the idea of the main embodiment.

The proposed solution advantageously permits elimination of the above-mentioned surface defects.

Again advantageously the proposed solution permits reduction of the number of production rejects.

Said aims and advantages will be highlighted in greater detail in the description of some preferred embodiments of the invention, provided as non-limiting examples, with reference to the attached drawings, wherein:
- figure 1 shows an axonometric view of a coat hanger carried out according to the invention;
- figure 2 shows a longitudinal section of a mould in open position, also subject of the invention;
- figure 3 shows a longitudinal section of the mould shown in figure 2 in closed position;
- figure 4 shows a cross section of the mould of figure 3;
- figures 5 and 6 show a longitudinal section and a cross section, respectively, of the mould of figure 2 in an operating phase;
- figures 7 and 8 show a longitudinal section and a cross section, respectively, of the mould of figure 2 in another operating phase;
- figure 9 shows a longitudinal section of another mould in closed position, also subject of the invention;
- figure 10 shows a cross section of the mould shown in figure 9;
- figures 11 and 12 show a longitudinal section and a cross section, respectively, of the mould of figure 9 in an operating phase.

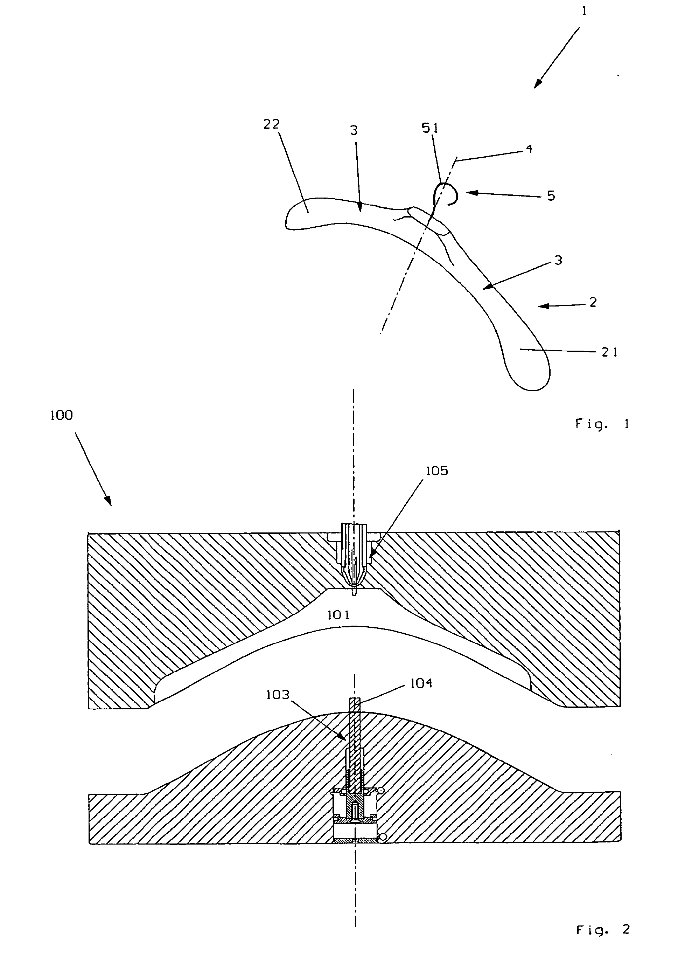

An example of embodiment of a coat hanger carried out according to the present industrial invention is shown in figure 1, where it is indicated as a whole by the numeral 1.

It comprises a main body 2 where it is possible to identify at least one supporting surface 3 for a garment.

According to the invention, the main body 2 is solid and transparent and is made of a material that comprises a thermoplastic polymer.

In the case in point the material used is SMMA, but in other embodiments it comprises polymers like PMMA and/or PC and/or PS and/or PET.

As regards the main body 2, it is provided with two opposite arms 21 and 22 which define the supporting surface 3 and develop radially with respect to an axis of symmetry 4.

The device furthermore comprises a gripping device 5 consisting, in the case in point, of a metal hook 51 arranged at the level of the axis of symmetry 4 of the body 2.

Another embodiment of a coat hanger, not represented herein, differs from the preceding one due to the fact that the device comprises at least one transverse rod also designed to support an item of clothing.

In particular said rod connects the ends of the two supporting arms and is provided with non-slip devices to prevent slipping of the item of clothing supported.

A method for producing a coat hanger by injection moulding of the type described above, also subject of the invention, provides, during injection of the thermoplastic material into the mould cavity, for control of the spreading of said material to prevent the generation of stresses due to the non-uniform cooling of the material between adjacent sections inside the cavity.

This advantageously and surprisingly permits the elimination of the surface and/or internal imperfections of the main body of the coat hanger.

This advantageous result permits the use of transparent materials and therefore the possibility of obtaining coat hangers with particular characteristics, also in terms of appearance.

To obtain said control, the method proposed includes an operation aimed to counteract/limit the free spreading of the material injected in the mould cavity.

This substantially ensures that the molten material moves in one single direction, i.e. it does not branch out, determining adjacent volumes inside the cavity with different temperatures and such as to generate the above-mentioned imperfections.

In the solution proposed, the front of molten material moves forward gradually until it occupies the entire cavity, meeting the walls of the mould and minimising the thermal gradient between the adjacent volumes inside the mass of molten material.

This advantageously allows the material injected to cool down without generating stresses inside the main body, thus avoiding the above-mentioned imperfections otherwise visible due to the transparency of the material used.

Figures 2 to 8 show an example of embodiment of a mould indicated as a whole by 100, also subject of the invention, which implements the method described.

According to the invention, in the cavity 101 of the mould 100 for the production of a coat hanger of the type shown in figure 1, means are provided, indicated as a whole by 103, which are designed to control spreading of the thermoplastic material injected into the cavity 101.

In the particular embodiment shown, said means 103 comprise a counteracting element 104 positioned facing the injection channel 105 of the molten material M.

Said counteracting element 104 is furthermore movable so as to withdraw gradually, during the injection phase, to give way to the material M which is moving forward, as will be better described below.

Another embodiment of a mould carried out according to the invention, indicated as a whole by 200 in the figures from 9 to 12, differs from the preceding one due to the fact that the means 103 comprise a movable injector 204.

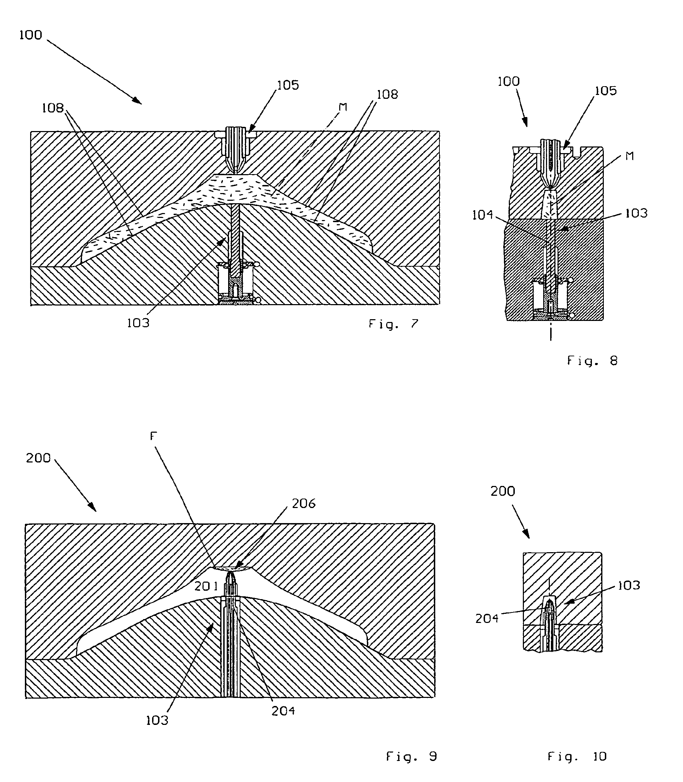

Said injector 204, as shown in detail in figures 9 and 10, is positioned, at the beginning of the injection operation, inside the cavity 201, near a wall 206 of the mould 200 to cooperate with it and is then gradually extracted from the cavity 201 according to the forward movement of the molten material M.

A further embodiment of a mould of the invention differs from the preceding ones due to the fact that it is equipped with at least one movable injector and at least one counteracting element, also cooperating with each other.

The method proposed will now be further illustrated describing the production phases of a coat hanger subject of the invention 1 by means of the mould 100 shown in figure 2.

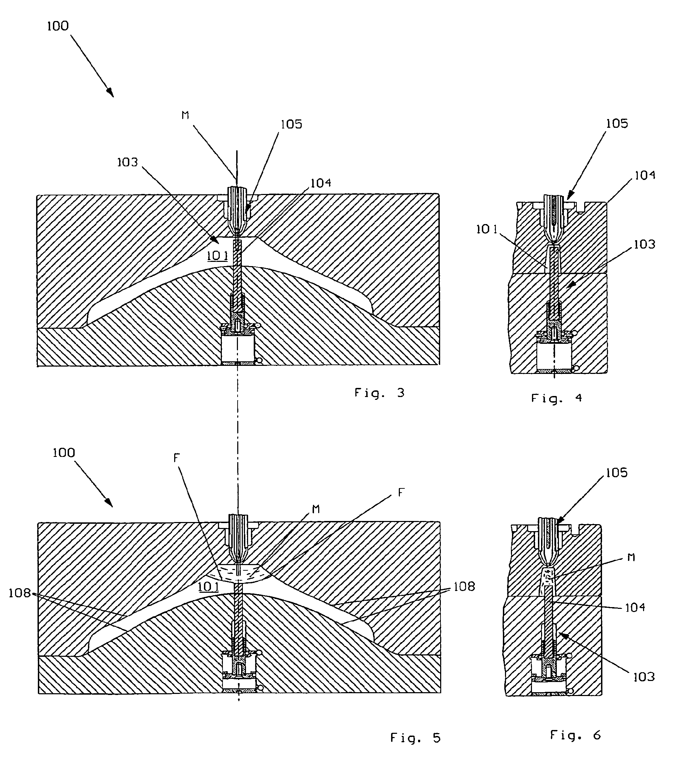

Once the mould 100 is closed, the counteracting element 104 is inserted into the cavity 101, as shown in figures 3 and 4.

Subsequently, the thermoplastic material M is injected while the element 104 counteracts/limits the non-controlled spreading of the material M in the cavity 101, so as to obtain one single direction of movement F of the molten material M.

Said front F thus moves forward gradually, as shown in figures 5 and 6, while the element 104 is progressively extracted from the cavity 101 according to said movement.

The material M thus spreads until it occupies the entire cavity 101 and meets the walls of the mould 108, as shown in figures 7 and 8.

As previously said, this minimises the thermal gradient between the adjacent sections inside the mass of molten material M, guaranteeing that the cooling of the injected material does not generate stresses inside the main body which can determine the above-mentioned imperfections.

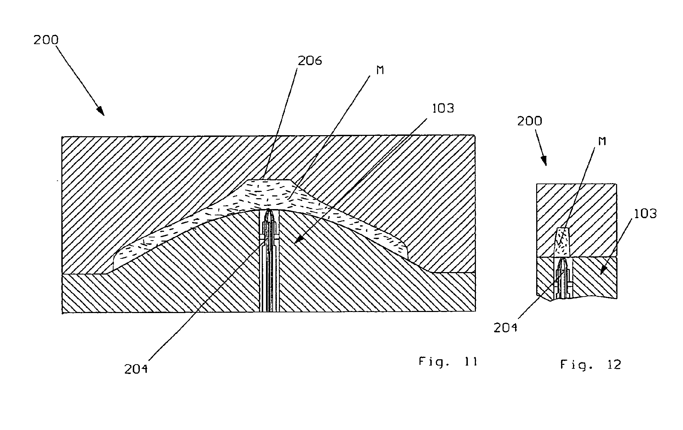

The operation of the mould shown in figures 9 to 12 is analogous to the preceding one, with the difference that it is the injector 204 that moves inside the cavity.

According to the above description, it is clear that there can be any number of counteracting elements 104 and movable injectors 204.

According to the above description, it is clear that the solution proposed solves the previously-mentioned drawbacks.

In particular, the solution proposed advantageously permits substantial elimination of the above-mentioned imperfections in an effective manner.

Again advantageously, the solution proposed permits reduction of the number of production rejects.

Although the invention has been described with reference to the attached drawings, modifications can be made in the production phase, as expressed by the claims listed below.

## Claims

1. Method for the production of a coat hanger (1) by injection moulding, wherein during injection of a thermoplastic material (M) into a cavity (201) of a mould (200) through an injector (204), an operation is performed to control the spreading of said material in said cavity to prevent the generation of stresses due to the nonuniform cooling of said material between adjacent sections inside said cavity, wherein said control operation is designed to obtain substantially one single direction of movement of said material, preventing it from branching out and thereby defining adjacent sections inside said cavity with different temperatures and such as to generate stresses and/or imperfections **characterised in that** said injector (204) is gradually extracted from said cavity (201) of said mould (200) during the injection of said thermoplastic material.

2. Method according to claim 1), **characterised in that** said thermoplastic material is transparent.

3. Method according to one of claims 1) to 2), **characterised in that** said thermoplastic material comprises a thermoplastic polymer.

4. Method according to claim 3), **characterised in that** said thermoplastic material comprises PMMA and/or SMMA and/or PC and/or PS and/or PET.

5. Method according to one of claims 1) to 4), **characterised in that** the coat hanger (1) comprising a main body (2) featuring at least one supporting surface (3) for a garment.

6. Method according to claim 5), **characterised in that** said main body (2) is provided with two opposite arms (21,22) which define said at least one supporting surface and develop symmetrically with respect to an axis of symmetry (4).

7. Method according to any one of claims 5) and 6), **characterised in that** it furthermore comprises the step of fixing a gripping and/or supporting element (51) to said main body (2).

8. Method according to claim 7), **characterised in that** said gripping and/or supporting element comprises a metal hook.

9. Method according to one of claims 7) to 8), **characterised in that** said gripping element is positioned at the level of said axis of symmetry.

10. Method according to any one of claims 6) to 9), **characterised in that** said coat hanger comprises at least one transverse rod, designed to support said items of clothing.

11. Method according to claim 10), **characterised in that** said at least one rod connects the ends of said at least two supporting arms.

12. Mould (200) for the production of a coat hanger (1) according to a method as claimed in one of claims 1) to 11), said mould comprising means for controlling the spreading of said thermoplastic material in the cavity (201) of said mould, **characterised in that** said means for controlling the spreading of said thermoplastic material comprise at least one movable injector (204) adapted to be gradually extracted from the cavity of said mould during the injection of said thermoplastic material.

13. Mould according to claim 12), **characterised in that** said at least one movable injector cooperates with at least one surface of said cavity of said mould.

14. Mould according to claims 12) and 13), **characterised in that** said at least one movable injector cooperates with at least one counteracting element (104).

15. Mould as claimed in one of claims 12) to 14), **characterised in that** said coat hanger comprises a main body (2) featuring at least one supporting surface (3) for a garment.

## Patentansprüche

1. Verfahren zur Herstellung eines Kleiderbügels (1) durch Spritzgießen, wobei während des Einspritzens eines thermoplastischen Materials (M) in eine Formhöhlung (201) einer Form (200) durch eine Einspritzvorrichtung (204) ein Vorgang ausgeführt wird, um die Ausbreitung des Materials in der Formhöhlung zu steuern, um die Entstehung von Spannungen aufgrund der nicht gleichmäßigen Abkühlung des Materials zwischen benachbarten Abschnitten im Inneren der Formhöhlung zu verhindern, wobei der Steuervorgang dazu ausgelegt ist, im Wesentlichen eine einzige Bewegungsrichtung des Materials zu erzielen und so zu verhindern, dass es verzweigt und dadurch benachbarte Abschnitte im Inneren der Formhöhlung mit unterschiedlichen Temperaturen, die Spannungen und/oder Mängel verursachen, definiert, **dadurch gekennzeichnet, dass** die Einspritzvorrichtung (204) während des Einspritzens des thermoplastischen Materials schrittweise aus der Formhöhlung (201) der Form (200) herausgezogen wird.

2. Verfahren nach Anspruch 1), **dadurch gekennzeichnet, dass** das thermoplastische Material transparent ist.

3. Verfahren nach einem der Ansprüche 1) oder 2), **dadurch gekennzeichnet, dass** das thermoplastische Material ein thermoplastisches Polymer umfasst.

4. Verfahren nach Anspruch 3), **dadurch gekennzeichnet, dass** das thermoplastische Material PMMA und/oder SMMA und/oder PC und/oder PS und/oder PET umfasst.

5. Verfahren nach einem der Ansprüche 1) bis 4), **dadurch gekennzeichnet, dass** der Kleiderbügel (1) einen Hauptkörper (2) umfasst, der zumindest eine Trägerfläche (3) für ein Kleidungsstück aufweist.

6. Verfahren nach Anspruch 5), **dadurch gekennzeichnet, dass** der Hauptkörper (2) mit zwei gegenüberliegenden Armen (21, 22) ausgestattet ist, die die zumindest eine Trägerfläche definieren und sich in Bezug auf eine Symmetrieachse (4) symmetrisch ausdehnen.

7. Verfahren nach einem der Ansprüche 5) oder 6), **dadurch gekennzeichnet, dass** es ferner den Schritt des Befestigens eines Greif- und/oder Trägerelements (51) am Hauptkörper (2) umfasst.

8. Verfahren nach Anspruch 7), **dadurch gekennzeichnet, dass** das Greif- und/oder Trägerelement einen Metallhaken umfasst.

9. Verfahren nach einem der Ansprüche 7) oder 8), **dadurch gekennzeichnet, dass** das Greifelement auf der Ebene der Symmetrieachse angeordnet ist.

10. Verfahren nach einem der Ansprüche 6) bis 9), **dadurch gekennzeichnet, dass** der Kleiderbügel zumindest einen Querstab umfasst, der dazu ausgelegt ist, die Bekleidungsstücke zu tragen.

11. Verfahren nach Anspruch 10), **dadurch gekennzeichnet, dass** der zumindest eine Stab die Enden der zumindest zwei Trägerarme verbindet.

12. Form (200) für die Herstellung eines Kleiderbügels (1) gemäß einem Verfahren nach einem der Ansprüche 1) bis 11), wobei die Form Mittel zum Steuern der Ausbreitung des thermoplastischen Materials in der Formhöhlung (201) der Form umfasst, **dadurch gekennzeichnet, dass** die Mittel zum Steuern der Ausbreitung des thermoplastischen Materials zumindest eine bewegliche Einspritzvorrichtung (204) umfassen, die dazu geeignet ist, während des Einspritzens des thermoplastischen Materials schrittweise aus der Formhöhlung der Form herausgezogen zu werden.

13. Form nach Anspruch 12), **dadurch gekennzeichnet, dass** die zumindest eine bewegliche Einspritzvorrichtung mit zumindest einer Fläche der Formhöhlung der Form zusammenwirkt.

14. Form nach Anspruch 12) und 13), **dadurch gekennzeichnet, dass** die zumindest eine bewegliche Einspritzvorrichtung mit zumindest einem gegenwirkenden Element (104) zusammenwirkt.

15. Form nach einem der Ansprüche 12) bis 14), **dadurch gekennzeichnet, dass** der Kleiderbügel einen Hauptkörper (2) umfasst, der zumindest eine Trägerfläche (3) für ein Kleidungsstück aufweist.

## Revendications

1. Méthode pour la réalisation d'un cintre (1) obtenu par moulage à injection, où durant l'injection d'un matériel thermoplastique (M) dans une cavité (201) d'un moule (200) au moyen d'un injecteur (204), une opération pour contrôler la diffusion dudit matériel dans ladite cavité est réalisée afm d'empêcher la formation de tensions dues au refroidissement non uniforme dudit matériel entre des sections adjacentes à l'intérieur de ladite cavité, où ladite opération de contrôle est réalisée pour obtenir essentiellement une direction de mouvement unique dudit matériel, empêchant à celui-ci de se diffuser et par conséquent de définir des sections adjacentes à l'intérieur de ladite cavité avec des températures différentes et de générer des tensions et/ou imperfections **caractérisée en ce que** ledit injecteur (204) est graduellement extrait de ladite cavité (201) dudit moule (200) durant l'injection dudit matériel thermoplastique.

2. Méthode selon la revendication 1), **caractérisée en ce que** ledit matériel thermoplastique est transparent.

3. Méthode selon l'une des revendications de 1) à 2), **caractérisée en ce que** ledit matériel thermoplastique comprend un polymère thermoplastique.

4. Méthode selon la revendication 3), **caractérisée en ce que** ledit matériel thermoplastique comprend PMMA et/ou SMMA et/ou PC et/ou PS et/ou PET.

5. Méthode selon l'une des revendications de 1) à 4), **caractérisée en ce que** ledit cintre (1) comprend un corps principal (2) avec au moins une surface de support (3) pour un vêtement.

6. Méthode selon la revendication 5), **caractérisée en ce que** ledit corps principal (2) est doté de deux bras opposés (21, 22) qui définissent ladite au moins une surface de support et se développent symétriquement par rapport à un axe de symétrie (4).

7. Méthode selon l'une quelconque des revendications 5) et 6), **caractérisée en ce qu'**elle comprend également la phase de fixation d'un élément d'accrochage et/ou de support (51) audit corps principal (2).

8. Méthode selon la revendication 7), **caractérisée en ce que** ledit élément d'accrochage et/ou de support comprend un crochet en métal.

9. Méthode selon l'une quelconque des revendications de 7) à 8), **caractérisée en ce que** ledit élément d'accrochage est positionné à hauteur dudit axe de symétrie.

10. Méthode selon l'une quelconque des revendications de 6) à 9), **caractérisée en ce que** ledit cintre comprend au moins une tige transversale conçue pour supporter lesdits vêtements.

11. Méthode selon la revendication 10), **caractérisée en ce que** ladite au moins une tige relie les extrémités desdits au moins deux bras de support.

12. Moule (200) pour la réalisation d'un cintre (1) selon une méthode comme revendiquée dans une des revendications de 1) à 11), ledit moule comprenant des moyens pour le contrôle de la diffusion dudit matériel thermoplastique dans la cavité (201) dudit moule, **caractérisé en ce que** lesdits moyens pour le contrôle de la diffusion dudit matériel thermoplastique comprennent au moins un injecteur mobile (204) apte à être graduellement extrait de la cavité dudit moule durant l'injection dudit matériel thermoplastique.

13. Moule selon la revendication 12), **caractérisé en ce que** ledit au moins un injecteur mobile coopère avec au moins une surface de ladite cavité dudit moule.

14. Moule selon les revendications 12) et 13), **caractérisé en ce que** ledit au moins un injecteur mobile coopère avec au moins un élément de contraste (104).

15. Moule selon l'une des revendications de 12) à 14), **caractérisé en ce que** ledit cintre comprend un corps principal (2) avec au moins une surface de support (3) pour un vêtement.
